# EUROPEAN PATENT SPECIFICATION

(11) **EP 4 488 142 B1**
(45) Date of publication and mention of the grant of the patent: **28.10.2026**
(21) Application number: 22929554.8
(22) Date of filing: 28.09.2022
(51) Int. Cl.: B61L 25/02, B61B 13/08, B60L 13/06, G01D 5/353, G01P 3/66, G01P 3/68, G01P 3/64, G01P 3/50

(54) **POSITIONING SYSTEM AND METHOD FOR MAGLEV TRAIN**
POSITIONIERSYSTEM UND VERFAHREN FÜR MAGNETSCHWEBEFAHRZEUGE
SYSTÈME DE POSITIONNEMENT ET PROCÉDÉ POUR TRAIN À SUSTENTATION MAGNÉTIQUE

(30) Priority: 04.03.2022 CN 202210212795
(43) Date of publication of application: 08.01.2025
(73) Proprietor: CRRC Qingdao Sifang Co., Ltd., Qingdao, Shandong 266111 (CN)
(72) Inventor: LIU, Xiankai, Qingdao, Shandong 266111 (CN); WU, Donghua, Qingdao, Shandong 266111 (CN); FU, Shanqiang, Qingdao, Shandong 266111 (CN); XIAO, Shi, Qingdao, Shandong 266111 (CN); TANG, Kaiyi, Qingdao, Shandong 266111 (CN); ZHANG, Zhiqiang, Qingdao, Shandong 266111 (CN)
(74) Representative: Prinz & Partner mbB
(86) International application number: PCT/CN2022/121995
(87) International publication number: WO 2023/165124

(56) References cited:
- EP-A1- 1 582 430
- CN-A- 101 000 253
- CN-A- 101 293 528
- CN-A- 106 153 088
- CN-A- 109 813 350
- CN-A- 111 751 570
- CN-A- 113 375 702
- CN-A- 114 604 296
- CN-B- 110 758 475
- JP-A- 2011 211 833
- US-A1- 2020 235 649

## Description

### CROSS REFERENCE OF RELATED APPLICATION

This application claims priority to Chinese Patent Application No.202210212795.7, titled "POSITIONING SYSTEM AND METHOD FOR MAGLEV TRAIN", filed on March, 4, 2022 with the China National Intellectual Property Administration.

### FIELD

The present disclosure relates to the field of maglev, and in particular to a system for positioning a maglev train and a method for positioning a maglev train.

### BACKGROUND

The maglev trains are propelled by magnetic levitation force. The maglev train utilizes electromagnetic force for contactless levitation and guidance between the train and the track, and employs the electromagnetic force generated by the linear motor to propel the train. As the maglev trains are suspended in the air and are only subject to air resistance, they can travel at high speeds. High-speed maglev trains can reach speeds of more than 400 kilometers per hour, while most medium and low-speed maglev trains can reach speeds of 100-200 kilometers per hour. However, as maglev train speeds increase, the train positioning solutions in conventional technology can only roughly locate the position of the train, leading to low positioning accuracy.

Hence, how to provide a solution to the above technical problem is a problem for those skilled in the art to consider.
CN 110 758 475 B provides a high-speed magnetic levitation train positioning and speed measurement system and a method based on array fiber grating sensing measurement, which has a reasonable structure and low environmental impact.
CN 106 153 088 A provides a bidirectional array fiber grating composite sensing system. The invention can simultaneously detect temperature and strain in a sensing area by using a single fiber, has fast detection speed, high system sensitivity, large detection capacity, simple system structure and reliability.
CN 101 293 528 A provides a temperature-insensitive fiber grating stress sensing train positioning and real-time tracking. A fiber grating stress sensor with different central wavelengths is embedded directly under one rail of each line of the railway. Each fiber grating stress sensor with a different center wavelength represents a geographical position; the upper end surface of the fiber grating stress sensor is in contact with the bottom surface of the rail.

### SUMMARY

An objective of the present disclosure is to provide a system and method for positioning a maglev train, in which the track position where the train has traveled is accurately located through a three-tier positioning, thereby providing a higher positioning accuracy. The invention is defined in the appended claims. Hereafter "embodiment(s)" refer to embodiment(s) of the present disclosure.

To solve the above technical problems, a system for positioning a maglev train is provided according to the present disclosure, the system includes:
an on-board magnet arranged at a bottom of the train;
two grating arrays arranged in parallel on a train track in a traveling direction of the train, where each of the two grating arrays includes multiple sets of magnetic induction gratings; center wavelengths of the magnetic induction gratings in the same set within a first grating array of the two grating arrays are the same, and center wavelengths of the magnetic induction gratings in different sets within the first grating array are different; center wavelengths of the magnetic induction gratings in the same set within a second grating array of the two grating arrays are different, and center wavelengths of magnetic induction gratings at the same arrangement position in different sets within the second grating array are the same; a first magnetic induction grating of each set of magnetic induction gratings is configured as a marker grating; and only one magnetic induction grating in the same grating array is affected by the on-board magnet at the same time instant;
an optical pulse generation module, configured to provide an optical pulse signal to the two grating arrays;
a data processing module, configured to perform primary positioning of the train based on a center wavelength shift of the marker grating, perform secondary positioning of the train based on a center wavelength shift of the first grating array, and perform tertiary positioning of the train based on a center wavelength shift of the second grating array, to progressively locate a track location where the train has traveled; the data processing module is further configured to:
   obtain a first to-be-detected signal returned by the first grating array;
   obtain a second to-be-detected signal returned by the second grating array;
   determine that the train travels to a track segment where a new set of magnetic induction gratings is located, in a case that a signal indicating the center wavelength shift of the marker grating is detected in the second to-be-detected signal;
   determine that the train travels to a track segment where a first set of magnetic induction gratings is located, in a case that a signal indicating the center wavelength shift of any one of magnetic induction gratings in the first set of magnetic induction gratings is detected in the first to-be-detected signal, where the first set of magnetic induction gratings is any set of magnetic induction gratings in the first grating array; and
   determine that the train travels to a track location where a target grating is located, in a case that a signal indicating a center wavelength shift of the target grating in a second set of magnetic induction gratings in parallel with the first set of magnetic induction gratings is detected in the second to-be-detected signal, where the target grating is any one of magnetic induction gratings in the second set of magnetic induction gratings.

In an embodiment, the optical pulse generation module includes:
a first swept light source, configured to send a first optical pulse signal after receiving a trigger signal;
a second swept light source, configured to send a second optical pulse signal after receiving the trigger signal;
a first optical pulse amplifier, configured to amplify the first optical pulse signal to obtain a first amplified optical pulse signal;
a second optical pulse amplifier, configured to amplify the second optical pulse signal to obtain a second amplified optical pulse signal;
a first circulator, configured to provide the first amplified optical pulse signal to the first grating array; and
a second circulator, configured to provide the second amplified optical pulse signal to the second grating array.

In an embodiment, the data processing module includes:
a first photoelectric converter, configured to receive a first to-be-detected optical signal returned by the first grating array from the first circulator, and convert the first to-be-detected optical signal into a first to-be-detected electrical signal;
a second photoelectric converter, configured to receive a second to-be-detected optical signal returned by the second grating array from the second circulator, and convert the second to-be-detected optical signal into a second to-be-detected electrical signal;
a data collector, configured to combine and encode the first to-be-detected electrical signal and the second to-be-detected electrical signal to obtain an electrical encoding signal; and
a data processor, configured to decode the electrical encoding signal to obtain the first to-be-detected electrical signal and the second to-be-detected electrical signal, and perform a three-tier positioning of the train based on the center wavelength shifts of the magnetic induction gratings indicated by the first to-be-detected electrical signal and the second to-be-detected electrical signal.

In an embodiment, the on-board magnet includes multiple sub-magnets; and the multiple sub-magnets are arranged in a Halbach array in the traveling direction of the train.

In an embodiment, a spacing between adjacent magnetic induction gratings in each grating array is equal to a first preset spacing threshold; a spacing between adjacent sub-magnets in the on-board magnet in traveling direction of the train is equal to a second preset spacing threshold, and a total length of the on-board magnet is equal to the first preset spacing threshold; and
the data processing module is further configured to determine a distance that the train keeps on traveling from a current location of the train based on a center wavelength shift of a target grating after determining the target grating whose center wavelength is shifting within the second grating array and the current location based on a three-tier positioning of the train.

In an embodiment, the first grating array is a grating array in O-band; the second grating array is a grating array in C-band.

In an embodiment, the data processing module is further configured to determine a forward condition and a reverse condition of the train within a preset track distance based on the center wavelength shift of the second grating array.

In an embodiment, the data processing module is further configured to determine a real-time running speed of the train based on a real-time location change and a running time of the train.

In order to solve the above technical problems, a method for positioning a maglev trains is provided according to the present disclosure, which is applied to the system for positioning a maglev train according to any one of the above embodiments. The method includes:
performing the primary positioning of the train based on the center wavelength shift of the marker grating;
performing the secondary positioning of the train based on the center wavelength shift of the first grating array; and
performing the tertiary positioning of the train based on the center wavelength shift of the second grating array to progressively locate the track location where the train has traveled.

A system for positioning a maglev train is provided according to the present disclosure. The system includes an on-board magnet arranged at a bottom of the train; two grating arrays arranged in parallel on a train track in a traveling direction of the train, an optical pulse generation module and a data processing module. Where, center wavelengths of the magnetic induction gratings in the same set within a first grating array are the same, and center wavelengths of the magnetic induction gratings in different sets within the first grating array are different; center wavelengths of the magnetic induction gratings in the same set within a second grating array are different, and center wavelengths of magnetic induction gratings at the same arrangement position in different sets within the second grating array are the same; a first magnetic induction grating of each set of magnetic induction gratings is configured as a marker grating. The data processing module is configured to perform primary positioning of the train based on a center wavelength shift of the marker grating, perform secondary positioning of the train based on a center wavelength shift of the first grating array, and perform tertiary positioning of the train based on a center wavelength shift of the second grating array, to progressively locate a track location where the train has traveled. As a result, in the present disclosure, the track location where the train has traveled can be located accurately through the three-tier positioning, thereby achieving a higher positioning accuracy.

A method for positioning a maglev train is further provided according to the present disclosure, which has the same beneficial effect as the system for positioning a maglev train above.

### BRIEF DESCRIPTION OF THE DRAWINGS

In order to illustrate technical solutions in embodiments of the present disclosure more clearly, drawings to be used in the description of the embodiments or the conventional technology are simply provided hereinafter. It is apparent that the drawings described below are only some embodiments of the present disclosure, and other drawings may be obtained by those skilled in the art based on the provided drawings without any creative effort.
Figure 1 is a schematic structural diagram of a system for positioning a maglev train according to an embodiment of the present disclosure;
Figure 2 is a specific structural schematic diagram of a system for positioning a maglev train according to an embodiment of the present disclosure;
Figure 3 is a schematic diagram of an arrangement of a Halbach array according to an embodiment of the present disclosure;
Figure 4 is a schematic diagram of an extended arrangement of a Halbach array according to an embodiment of the present disclosure;
Figure 5 is a schematic diagram of magnetic induction of two grating arrays according to an embodiment of the present disclosure; and
Figure 6 is a flowchart of a method for positioning a maglev train according to an embodiment of the present disclosure.

### DETAILED DESCRIPTION OF THE EMBODIMENTS

The essence of the present disclosure is to provide a system for positioning a maglev train and a method for positioning a maglev train, which can locate the track location where the train has traveled accurately through a three-tier positioning, thereby providing a higher positioning accuracy.

In order to make objectives, technical solutions and advantages of the present disclosure clearer, the technical solutions in the embodiments of the present disclosure are further described clearly and thoroughly with reference to the drawings in the embodiments of the present disclosure hereinafter. It is apparent that the described embodiments are only some, rather than all embodiments of the present disclosure.

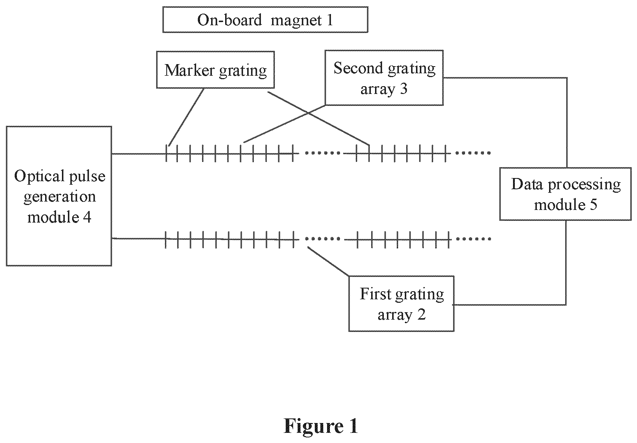

Reference is made to Figure 1. Figure 1 is a schematic structural diagram of a system for positioning a maglev train according to an embodiment of the present disclosure.

The system for positioning a maglev train includes:
an on-board magnet 1 arranged at a bottom of a train;
two grating arrays arranged in parallel on a train track in a traveling direction of the train; where, the two grating arrays each contain multiple sets of magnetic induction gratings; center wavelengths of the magnetic induction gratings in a same set within a first grating array 2 are the same, and center wavelengths of the magnetic induction gratings in different sets within the first grating array 2 are different; center wavelengths of the magnetic induction gratings in a same set within a second grating array 3 are different, center wavelengths of gratings at a same arrangement position of the magnetic induction gratings in different sets within a second grating array 3 are the same, and a first magnetic induction grating of each set of magnetic induction gratings is provided as a marker grating; only one magnetic induction grating in a same grating array is affected by the on-board magnet 1 at the same time instant;
an optical pulse generation module 4, configured to provide an optical pulse signal to the two grating arrays respectively;
a data processing module 5, configured to perform primary positioning of the train based on a center wavelength shift of the marker grating, perform secondary positioning of the train based on the center wavelength shift of the first grating array 2, and perform tertiary positioning of the train based on the center wavelength shift of the second grating array 3, to step-by-step locate a track location where the train has traveled.

In an embodiment, the system for positioning a maglev train according to the present disclosure includes an on-board magnet 1, two grating arrays, an optical pulse generation module 4 and a data processing module 5, the working principle of the system is as follows.

The on-board magnet 1 is arranged at the bottom of the train. Two grating arrays are arranged in parallel on the train track in the travelling direction of the train. Both grating arrays include several sets of magnetic induction gratings (for example, 16 sets). Each set of magnetic induction gratings includes the same number of gratings. For example, each set of magnetic induction gratings includes 16 gratings. When the maglev train passes through the grating array, the magnetic induction grating in the grating array is affected by the on-board magnet 1, and the center wavelength of the optical signal returned by the magnetic induction grating shifts (this is because each grating is attached with a small magnetic bead and encapsulated through a sensitization structure; when the train travels, the on-board magnet 1 arranged under the maglev train body attracts the small magnetic bead to cause the grating to deform, thereby shifting the center wavelength of the grating). It should be noted that only one grating in the same grating array is affected by the on-board magnet 1 at the same time instant. Since the two grating arrays are arranged in parallel, the gratings of different grating arrays at the same arrangement position are affected by the on-board magnet 1 at the same time instant, for example, the N-th grating in the first grating array 2 and the N-th grating in the second grating array 3 are affected by the on-board magnet 1 at the same time instant.

In the two grating arrays, center wavelengths of the magnetic induction gratings in a same set within a first grating array 2 are the same, while center wavelengths of the magnetic induction gratings in different sets within the first grating array 2 are different. In an embodiment, multiple sets of magnetic induction gratings in the first grating array 2 may be arranged in order of increasing center wavelength gradually. The center wavelengths of each grating in the same set of magnetic induction gratings within the second grating array 3 are different (e.g., the gratings in the same set of magnetic induction gratings within the second grating array 3 may be arranged in order of increasing center wavelength gradually). The center wavelengths of the gratings in different sets of magnetic induction gratings at the same arrangement position are the same (e.g., the center wavelength of the M-th grating in the N-th set of magnetic induction gratings within the second grating array 3 is the same as the center wavelength of the M-th grating in the the (N+1)-th set of magnetic induction gratings within the second grating array 3), and the first grating in each set of magnetic induction gratings within the second grating array 3 is configured as a marker grating. Where, other gratings in the grating array use gratings with a reflectivity below 2 % other than the marker gratings, while marker gratings may use low-reflectivity gratings with a reflectivity of 5% to 10% to distinguish from grating arrays with a reflectivity below 2%, but without severely attenuating the optical signal.

The optical pulse generation module 4 provides optical pulse signals to the two grating arrays respectively, and each magnetic induction grating in the two grating arrays returns an optical signal indicating its own center wavelength shift to the data processing module 5. The data processing module 5 first performs the primary positioning of the train based on the center wavelength shift of the marker grating, then performs secondary positioning of the train based on the center wavelength shift of the first grating array 2, and finally performs tertiary positioning of the train based on the center wavelength shift of the second grating array 3, to progressively locate the track location where the train has traveled.

According to the present disclosure, the track location where the train has traveled can be accurately located through three-tier positioning, resulting in a high positioning accuracy.

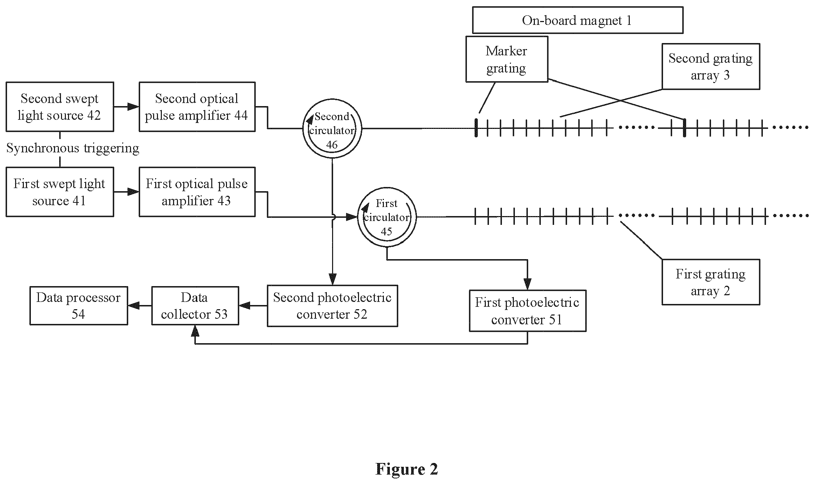

Based on the above embodiment, reference is made to Figure 2. Figure 2 is a specific structural schematic diagram of a system for positioning a maglev train according to an embodiment of the present disclosure.

In an embodiment, the optical pulse generation module 4 includes:
a first swept light source 41, configured to send a first optical pulse signal after receiving a trigger signal;
a second swept light source 42, configured to send a second optical pulse signal after receiving the trigger signal;
a first optical pulse amplifier 43, configured to amplify the first optical pulse signal to obtain a first amplified optical pulse signal;
a second optical pulse amplifier 44, configured to amplify the second optical pulse signal to obtain a second amplified optical pulse signal;
a first circulator 45, configured to provide the first amplified optical pulse signal to the first grating array 2; and
a second circulator 46, configured to provide the second amplified optical pulse signal to the second grating array 3.

In an embodiment, the optical pulse generation module 4 according to the present disclosure includes a first swept light source 41, a second swept light source 42, a first optical pulse amplifier 43, a second optical pulse amplifier 44, a first circulator 45 and a second circulator 46, and the working principle is as follows.

The first swept light source 41 sends a first optical pulse signal to the first optical pulse amplifier 43 after receiving a trigger signal. The first optical pulse amplifier 43 amplifies the first optical pulse signal to obtain a first amplified optical pulse signal, and sends the first amplified optical pulse signal to the first circulator 45. The first circulator 45 provides the first amplified optical pulse signal to the first grating array 2.

The second swept light source 42 and the first swept light source 41 use the same trigger signal. The second swept light source 42 sends a second optical pulse signal to the second optical pulse amplifier 44 after receiving the trigger signal. The second optical pulse amplifier 44 amplifies the second optical pulse signal to obtain a second amplified optical pulse signal, and sends the second amplified optical pulse signal to the second circulator 46. The second circulator 46 provides the second amplified optical pulse signal to the second grating array 3.

In an embodiment, the spectral bandwidth of the two swept light sources may reach more than 40nm, the wavelength scanning step is adjustable from 10pm to 1nm, the period and period interval during sweeping are adjustable from 1us to 1ms, with a minimum controllable pulse width of 1us and a minimum pulse interval of 1us.

In an embodiment, the data processing module 5 includes:
a first photoelectric converter 51, configured to receive a first to-be-detected optical signal returned by the first grating array 2 from the first circulator 45, and convert the first to-be-detected optical signal into a first to-be-detected electrical signal;
a second photoelectric converter 52, configured to receive a second to-be-detected optical signal returned by the second grating array 3 from the second circulator 46, and convert the second to-be-detected optical signal into a second to-be-detected electrical signal;
a data collector 53, configured to combine and encode the first to-be-detected electrical signal and the second to-be-detected electrical signal to obtain an electrical encoding signal; and
a data processor 54, configured to decode the electrical encoding signal to obtain the first to-be-detected electrical signal and the second to-be-detected electrical signal, and perform the three-tier positioning of the train based on the center wavelength shifts of the magnetic induction gratings indicated by the first to-be-detected electrical signal and the second to-be-detected electrical signal.

In an embodiment, the data processing module 5 according to the present disclosure includes a first photoelectric converter 51, a second photoelectric converter 52, a data collector 53 and a data processor 54, and the working principle is as follows.

The first circulator 45 further receives a first to-be-detected optical signal returned by the first grating array 2 and sends the first to-be-detected optical signal to the first photoelectric converter 51. The first photoelectric converter 51 converts the first to-be-detected optical signal into a first to-be-detected electrical signal, and sends the first to-be-detected electrical signal to the data collector 53.

The second circulator 46 further receives a second to-be-detected optical signal returned by the second grating array 3 and sends the second to-be-detected optical signal to the second photoelectric converter 52. The second photoelectric converter 52 converts the second to-be-detected optical signal into a second to-be-detected electrical signal, and sends the second to-be-detected electrical signal to the data collector 53.

The data collector 53 combines and encodes the first to-be-detected electrical signal and the second to-be-detected electrical signal (e.g., they can be combined and encoded by using a subscript-superscript combination encoding form, such as using the first to-be-detected electrical signal corresponding to the N-th grating in the first grating array 2 as a superscript for a data point, and using the second to-be-detected electrical signal corresponding to the N-th grating in the second grating array 3 as a subscript for the same data point) to obtain the electrical encoding signal, and the electrical encoding signal is sent to data processor 54. The data processor 54 decodes the electrical encoding signal to obtain the first to-be-detected electrical signal and the second to-be-detected electrical signal, and performs the three-tier positioning of the train based on the center wavelength shifts of the gratings indicated by the decoded first to-be-detected electrical signal and the second to-be-detected electrical signal.

In an embodiment, each of the two photoelectric converters have a -3db bandwidth of DC-500MHz, a rise time of 0.55ns, a gain of 18×103V/W, a saturation optical power of 100uW, and a responsivity of 0.9A/W, enabling high-precision photoelectric conversion. The data collector can collect up to 4 channels, each channel with a sampling rate of 500Ms/s and a sampling precision of 16 bits, allowing for high-precision data collection.

In an embodiment, the on-board magnet 1 includes multiple sub-magnets; where the multiple sub-magnets are arranged in a Halbach array in the traveling direction of the train.

In an embodiment, the on-board magnet 1 provided in the present disclosure includes multiple sub-magnets, which are arranged in a Halbach array in the traveling direction of the train to enhance the magnetic force and the sensitivity of the system.

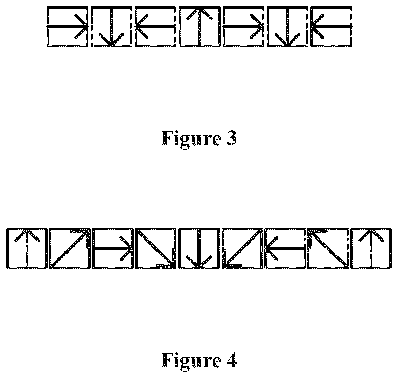

As shown in Figure 3, which is one arrangement of a Halbach array (the arrows in the figure represent the direction of the magnetic field), which can increase the magnetic field intensity without reducing the accuracy; as shown in Figure 4, which illustrates one extended arrangement of a Halbach array, which compromises some accuracy to further increase the magnetic field intensity, making this system suitable for a wider range of practical environments.

In an embodiment, a spacing between adjacent magnetic induction gratings in each grating array is equal to a first preset spacing threshold; a spacing between adjacent sub-magnets in the on-board magnet 1 in the traveling direction of the train is equal to a second preset spacing threshold , and a total length of the on-board magnet 1 is equal to the first preset spacing threshold;

The data processing module 5 is further configured to determine a distance that the train keeps on traveling from a current location of the train based on a center wavelength shift of a target grating after determining the target grating whose center wavelength is shifting within the second grating array 3 and the current location of the train based on the three-tier positioning of the train.

In an embodiment of the present disclosure, the spacing between adjacent gratings in each grating array is equal to the first preset spacing threshold, i.e., the gratings in each grating array are evenly arranged. In the travelling direction of the train, spacing between adjacent sub-magnets in the on-board magnet 1 is equal to the second preset spacing threshold, and the total length of the on-board magnet 1 is equal to the first preset spacing threshold, which can ensure that only one grating in the same grating array is affected by the on-board magnet at the same time instant.

Based on this, the data processing module 5 may further determine a distance that the train keeps on traveling from the current location of the train based on a center wavelength shift of a target grating after determining a grating (referred to as the target grating) whose center wavelength is shifting within the second grating array 3 and the current location of the train based on the three-tier positioning of the train.

In an embodiment, the first grating array 2 is a grating array in O-band; the second grating array 3 is a grating array in C-band.

In an embodiment of the present disclosure, the first grating array 2 is a grating array in O-band, the center wavelength of the grating of the grating array in O-band is 1280-1310 nm, and 16 gratings are included in one set. And, the second grating array 3 is a grating array in C-band, the center wavelength of the grating of the grating array in C-band is 1532-1560nm, and 16 gratings are included in one set. The grating array is a weak grating array and can be arranged over long distances.

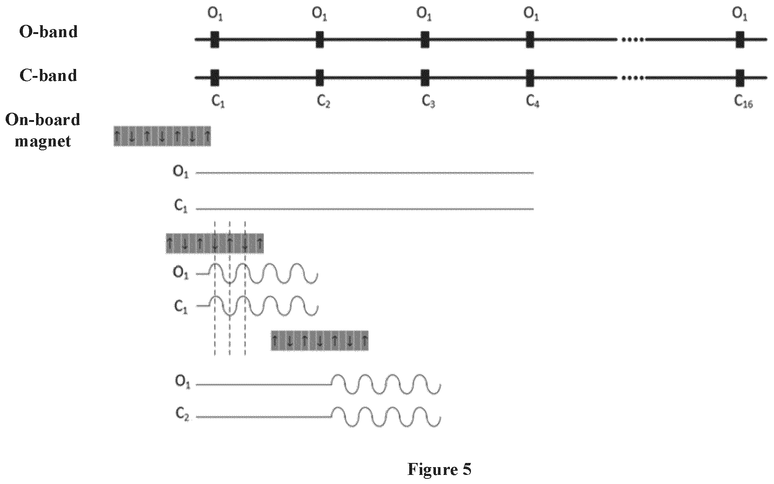

As shown in Figure 5, it provides a set of magnetic induction gratings in the first grating array 2 and a set of magnetic induction gratings in the second grating array 3 (the principles of the remaining sets of magnetic induction gratings are the same and will not be repeated in the present disclosure). Since the center wavelengths of the same set of magnetic induction gratings in the first grating array 2 are the same, the set of magnetic induction gratings in the first grating array 2 in Figure 5 is represented by O₁. Since center wavelengths of the same set of magnetic induction gratings in the second grating array 3 are different, the set of magnetic induction gratings in the second grating array 3 in Figure 5 are represented as C₁ to C₁₆ respectively (a sample of combination encoding method: O₁_C₁).

As shown in Figure 5, a simple sub-magnet arrangement of the vehicle-mounted magnet 1 is further provided, where shows only two magnetic field directions. When no on-board magnet 1 passes the magnetic induction grating, the center wavelength of the magnetic induction grating does not change. When any one of sub-magnets in the on-board magnet 1 passes the magnetic induction grating, the center wavelength of the magnetic induction grating is affected accordingly (as the sinusoidal change shown in Figure 5). Based on this, after determining a target grating whose center wavelength is shifting in the second grating array 3 and a current location (i.e., the on-board magnet of the train travels on the track location where the target grating is located) of the train based on the three-tier positioning of the train, the data processing module 5 may further determine the distance that the train keeps on traveling from the current location of the train based on the number of crests and troughs of the center wavelength of the target grating. Since the distance between adjacent crest and trough = the spacing between adjacent sub-magnets of on-board magnet = the second preset spacing threshold, when N crests and troughs appear again in the center wavelength of the target grating, the distance that the train keeps on traveling = N * second preset spacing threshold.

In an embodiment, the data processing module 5 is further configured to:
obtain the first to-be-detected signal returned by the first grating array;
obtain the second to-be-detected signal returned by the second grating array;
determine that the train travels to a track segment where a new set of magnetic induction gratings is located, in a case that a signal indicating the center wavelength shift of the marker grating is detected in the second to-be-detected signal;
determine that the train travels to a track segment where a first set of magnetic induction gratings is located, in a case that a signal indicating the center wavelength shift of any grating in the first set of magnetic induction gratings is detected in the first to-be-detected signal, where the first set of magnetic induction gratings is any set of magnetic induction gratings in the first grating array; and
determine that the train travels to a track location where a target grating is located, in a case that a signal indicating the center wavelength shift of the target grating in a second set of magnetic induction gratings in parallel with the first set of magnetic induction gratings is detected in the second to-be-detected signal, where the target grating is any grating in the second set of magnetic induction gratings.

**In** an embodiment of the present disclosure, the process of the three-tier positioning of the train performed by the data processing module 5 includes as follows: 1) obtaining the first to-be-detected signal returned by the first grating array; obtaining the second to-be-detected signal returned by the second grating array; 2) determine that the train travels to a track segment where a new set of magnetic induction gratings is located, in a case that a signal indicating the center wavelength shift of the marker grating is detected in the second to-be-detected signal (since the center wavelengths of the marker gratings in different sets of magnetic induction gratings within the second grating array are the same, the center wavelength shifts of the marker gratings in different sets of magnetic induction gratings are the same when encountering the on-board magnet. In this case, when a signal indicating the center wavelength shift of the marker grating is detected in the second to-be-detected signal, it is unable to determine the marker grating of which set of magnetic induction gratings is encountered the on-board magnet, it can only determine that the train has traveled to the track segment where the new set of magnetic induction gratings is located by arranging the marker grating as a first grating of each set of magnetic induction gratings); 3) determining that the train travels to a track segment where a first set of magnetic induction gratings is located, in a case that a signal indicating the center wavelength shift of any grating of any set of magnetic induction gratings (referred to as the first set of magnetic induction gratings) in the first grating array is detected in the first to-be-detected signal (since the center wavelengths of the same set of magnetic induction gratings in the first grating array are the same, the center wavelength shifts of gratings in the first set of magnetic induction gratings are the same when encountering the on-board magnet. In this case, when a signal indicating the center wavelength shift of any grating in the first set of magnetic induction gratings is detected in the first to-be-detected signal, it is unable to determine which grating in the first set of magnetic induction gratings encountered the on-board magnet, it can only determine that the train has traveled to the track segment where the first set of magnetic induction gratings is located); 4) determining that the train travels to a track location where a target grating is located, in a case that a signal indicating the center wavelength shift of any grating (referred to as the target grating) in a second set of magnetic induction gratings in parallel with the first set of magnetic induction gratings is detected in the second to-be-detected signal (since the center wavelengths of the same set of magnetic induction gratings in the second grating array are different, the center wavelength shifts of gratings of the same set of magnetic induction gratings are different when encounter the on-board magnet. In this case, when the signal indicating the center wavelength shift of the target grating in the second set of magnetic induction gratings is detected in the second to-be-detected signal, it is determined that the target grating in the second set of magnetic induction gratings encountered the on-board magnet, i.e., it is determined that the on-board magnet of the train has traveled to the track location where the target grating is located).

In addition, in the present disclosure, the data processing module 5 may further correct the current location of the train obtained by the three-tier positioning of the maglev train through calculating the speed and the conventional delay of data transmission processing to obtain more accurate positioning of the train.

In an embodiment, the data processing module 5 is further configured to:
determine a forward condition and a reverse condition of the train within a preset track distance based on the center wavelength shift of the second grating array.

Furthermore, since the center wavelengths of the same set of magnetic induction gratings in the second grating array are different, when the train is moving forward or backward, the center wavelengths of the same set of magnetic induction gratings in the second grating array changes differently, the data processing module 5 provided in the present disclosure may further determine the forward condition and reverse condition of the train within a short distance based on the center wavelength shift of the second grating array (forward: forward traveling direction; reverse: reverse traveling direction).

In an embodiment, the data processing module 5 is further configured to:
determine a real-time running speed of the train based on a real-time location change and a running time of the train.

Furthermore, the data processing module 5 in the present disclosure may be further configured to obtain the real-time location change of the train based on the track location where the train has traveled obtained by the real-time positioning, and determine the real-time running speed of the train based on the real-time location change and the running time of the train.

Based on the description above, during the traveling of the maglev train, the position, speed, traveling direction and the like of the maglev train can be obtained through the primary confirmation of the marker grating, the secondary confirmation of the wave in O-band with the same wavelength range in the same set, and the tertiary confirmation of the wave in C-band with different wavelengths in the same set. This system has the advantages of robust environmental adaptability, high sensitivity, high measurement accuracy, anti-interference and long service life.

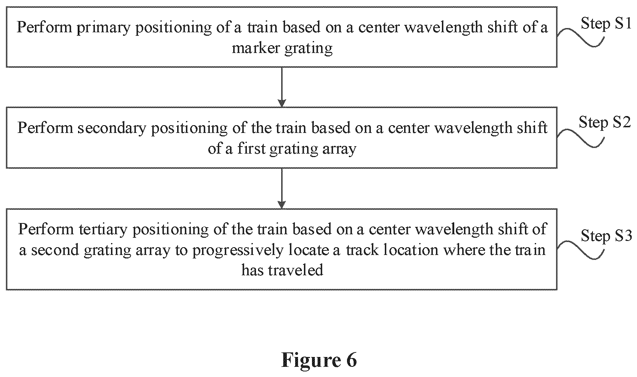

Reference is made to Figure 6. Figure 6 is a flowchart of a method for positioning a maglev train according to an embodiment of the present disclosure.

The method for positioning a maglev train may be applied to any one of embodiments of the system for positioning a maglev train above. The method includes step S1 to step S3 as follows.

In step S1, primary positioning of a train is performed based on a center wavelength shift of a marker grating.

In step S2, secondary positioning of the train is performed based on a center wavelength shift of a first grating array.

In step S3, tertiary positioning of the train is performed based on a center wavelength shift of a second grating array, to progressively a track location where the train has traveled.

The method for positioning a maglev train provided according to the present disclosure can be referred to the above embodiments of the system for positioning a maglev train, which will not be repeated here.

It should be further noted that in the present disclosure, the relationship terminologies such as "first" and "second" are only used herein to distinguish one entity or operation from another entity or operation, rather than to necessitate or imply that the actual relationship or order exists between the entities or operations. Furthermore, terms "include", "comprise" or any other variants thereof are intended to be non-exclusive. Therefore, a process, method, article or device including a series of elements includes not only the elements but also other elements that are not enumerated or other elements inherent to such process, method, article or device. Unless expressively limited otherwise, a process, method, article or device limited by "comprising/including a(n) ..." does not exclude existence of another identical element in such process, method, article or device.

Those skilled in the art can implement or practice the present disclosure based on the above description of the disclosed embodiments. Various modifications to the embodiments are apparent for the skilled in the art.

## Claims

1. A system for positioning a maglev train, comprising:
an on-board magnet (1) arranged at a bottom of a train;
two grating arrays arranged in parallel on a train track in a traveling direction of the train, wherein
each of the two grating arrays comprises a plurality of sets of magnetic induction gratings;
center wavelengths of the magnetic induction gratings in the same set within a first grating array (2) of the two grating arrays are the same, and center wavelengths of the magnetic induction gratings in different sets within the first grating array are different;
center wavelengths of the magnetic induction gratings in the same set within a second grating array (3) of the two grating arrays are different, and center wavelengths of magnetic induction gratings at the same arrangement position in different sets within the second grating array are the same;
a first magnetic induction grating of each set of magnetic induction gratings is configured as a marker grating; and
only one magnetic induction grating in the same grating array is affected by the on-board magnet at the same time instant;
an optical pulse generation module (4), configured to provide an optical pulse signal to the two grating arrays;
a data processing module (5), configured to perform primary positioning of the train based on a center wavelength shift of the marker grating, perform secondary positioning of the train based on a center wavelength shift of the first grating array, and perform tertiary positioning of the train based on a center wavelength shift of the second grating array, to progressively locate a track location where the train has traveled; and
wherein the data processing module is further configured to:
obtain a first to-be-detected signal returned by the first grating array;
obtain a second to-be-detected signal returned by the second grating array;
determine that the train travels to a track segment where a new set of magnetic induction gratings is located, in a case that a signal indicating the center wavelength shift of the marker grating is detected in the second to-be-detected signal;
determine that the train travels to a track segment where a first set of magnetic induction gratings is located, in a case that a signal indicating the center wavelength shift of any one of magnetic induction gratings in the first set of magnetic induction gratings is detected in the first to-be-detected signal, wherein the first set of magnetic induction gratings is any set of magnetic induction gratings in the first grating array; and
determine that the train travels to a track location where a target grating is located, in a case that a signal indicating a center wavelength shift of the target grating in a second set of magnetic induction gratings in parallel with the first set of magnetic induction gratings is detected in the second to-be-detected signal, wherein the target grating is any one of magnetic induction gratings in the second set of magnetic induction gratings.

2. The system for positioning the maglev train according to claim 1, wherein the optical pulse generation module comprises:
a first swept light source (41), configured to send a first optical pulse signal after receiving a trigger signal;
a second swept light source (42), configured to send a second optical pulse signal after receiving the trigger signal;
a first optical pulse amplifier (43), configured to amplify the first optical pulse signal to obtain a first amplified optical pulse signal;
a second optical pulse amplifier (44), configured to amplify the second optical pulse signal to obtain a second amplified optical pulse signal;
a first circulator (45), configured to provide the first amplified optical pulse signal to the first grating array; and
a second circulator (46), configured to provide the second amplified optical pulse signal to the second grating array.

3. The system for positioning the maglev train according to claim 2, wherein the data processing module comprises:
a first photoelectric converter (51), configured to receive a first to-be-detected optical signal returned by the first grating array from the first circulator, and convert the first to-be-detected optical signal into a first to-be-detected electrical signal;
a second photoelectric converter (52), configured to receive a second to-be-detected optical signal returned by the second grating array from the second circulator, and convert the second to-be-detected optical signal into a second to-be-detected electrical signal;
a data collector (53), configured to combine and encode the first to-be-detected electrical signal and the second to-be-detected electrical signal to obtain an electrical encoding signal; and
a data processor (54), configured to decode the electrical encoding signal to obtain the first to-be-detected electrical signal and the second to-be-detected electrical signal, and perform a three-tier positioning of the train based on the center wavelength shifts of the magnetic induction gratings indicated by the first to-be-detected electrical signal and the second to-be-detected electrical signal.

4. The system for positioning the maglev train according to claim 1, wherein the on-board magnet comprises a plurality of sub-magnets, and the plurality of sub-magnets are arranged in a Halbach array in the traveling direction of the train.

5. The system for positioning the maglev train according to claim 4, wherein a spacing between adjacent magnetic induction gratings in each grating array is equal to a first preset spacing threshold; a spacing between adjacent sub-magnets in the on-board magnet in traveling direction of the train is equal to a second preset spacing threshold, and a total length of the on-board magnet is equal to the first preset spacing threshold; and
the data processing module is further configured to determine a distance that the train keeps on traveling from a current location of the train based on a center wavelength shift of a target grating after determining the target grating whose center wavelength is shifting within the second grating array and the current location based on a three-tier positioning of the train.

6. The system for positioning the maglev train according to claim 1, wherein the first grating array is a grating array in O-band; the second grating array is a grating array in C-band.

7. The system for positioning the maglev train according to claim 1, wherein the data processing module is further configured to:
determine a forward condition and a reverse condition of the train within a preset track distance based on the center wavelength shift of the second grating array.

8. The system for positioning the maglev train according to claim 1, wherein the data processing module is further configured to:
determine a real-time running speed of the train based on a real-time location change and a running time of the train.

9. A method for positioning a maglev train, applied to the system for positioning a maglev train according to any one of claims 1 to 8, wherein the method comprises:
performing the primary positioning of the train based on the center wavelength shift of the marker grating (S1);
performing the secondary positioning of the train based on the center wavelength shift of the first grating array (S2); and
performing the tertiary positioning of the train based on the center wavelength shift of the second grating array to progressively locate the track location where the train has traveled (S3).

## Patentansprüche

1. System zur Positionierung einer Magnetschwebebahn, mit:
einem bordeigenen Magneten (1), der am Boden eines Zuges angeordnet ist;
zwei Gitteranordnungen, die parallel auf einem Bahngleis in Fahrtrichtung des Zuges angeordnet sind, wobei
jede der beiden Gitteranordnungen mehrere Magnetinduktionsgittersätze umfasst;
Mittenwellenlängen der Magnetinduktionsgitter in ein und demselben Satz innerhalb einer ersten Gitteranordnung (2) der beiden Gitteranordnungen gleich sind und Mittenwellenlängen der Magnetinduktionsgitter in verschiedenen Sätzen innerhalb des ersten Gitteranordnung unterschiedlich sind;
Mittenwellenlängen der Magnetinduktionsgitter in ein und demselben Satz innerhalb einer zweiten Gitteranordnung (3) der beiden Gitteranordnungen unterschiedlich sind und Mittenwellenlängen von Magnetinduktionsgittern an derselben Anordnungsposition in verschiedenen Sätzen innerhalb der zweiten Gitteranordnung gleich sind;
ein erstes Magnetinduktionsgitter jedes Magnetinduktionsgittersatzes als Markierungsgitter ausgebildet ist; und
nur ein Magnetinduktionsgitter in ein und derselben Gitteranordnung zum selben Zeitpunkt vom bordeigenen Magneten beeinflusst wird;
einem Modul (4) zur Erzeugung optischer Impulse, das dazu ausgebildet ist, ein optisches Impulssignal für die beiden Gitteranordnungen bereitzustellen;
einem Datenverarbeitungsmodul (5), das dazu ausgebildet ist, eine primäre Positionierung des Zuges auf der Grundlage einer Mittenwellenlängenverschiebung des Markierungsgitters durchzuführen, eine sekundäre Positionierung des Zuges auf der Grundlage einer Mittenwellenlängenverschiebung der ersten Gitteranordnung durchzuführen und eine tertiäre Positionierung des Zuges auf der Grundlage einer Mittenwellenlängenverschiebung der zweiten Gitteranordnung durchzuführen, um eine Gleisstelle, die der Zug durchfahren hat, schrittweise zu lokalisieren; und
wobei das Datenverarbeitungsmodul ferner dazu ausgebildet ist:
ein erstes zu erfassendes Signal zu erhalten, das von der ersten Gitteranordnung zurückgesendet wird;
ein zweites zu erfassendes Signal zu erhalten, das von der zweiten Gitteranordnung zurückgesendet wird;
festzustellen, dass der Zug zu einem Gleisabschnitt fährt, in dem sich ein neuer Magnetinduktionsgittersatz befindet, falls im zweiten zu erfassenden Signal ein Signal erfasst wird, das die Mittenwellenlängenverschiebung des Markierungsgitters angibt;
festzustellen, dass der Zug zu einem Gleisabschnitt fährt, in dem sich ein erster Magnetinduktionsgittersatz befindet, falls im ersten zu erfassenden Signal ein Signal erfasst wird, das die Mittenwellenlängenverschiebung eines beliebigen der Magnetinduktionsgitter im ersten Magnetinduktionsgittersatz anzeigt, wobei es sich bei dem ersten Magnetinduktionsgittersatz um einen beliebigen Magnetinduktionsgittersatz in der ersten Gitteranordnung handelt; und
festzustellen, dass der Zug zu einer Gleisstelle fährt, an der sich ein Zielgitter befindet, falls im zweiten zu erfassenden Signal ein Signal erfasst wird, das eine Mittenwellenlängenverschiebung des Zielgitters in einem zweiten Magnetinduktionsgittersatz parallel zum ersten Magnetinduktionsgittersatz anzeigt, wobei es sich bei dem Zielgitter um ein beliebiges Magnetinduktionsgitter im zweiten Magnetinduktionsgittersatz handelt.

2. System zur Positionierung der Magnetschwebebahn nach Anspruch 1, wobei das Modul zur Erzeugung optischer Impulse Folgendes umfasst:
eine erste durchgestimmte Lichtquelle (41), die dazu ausgebildet ist, nach dem Empfang eines Triggersignals ein erstes optisches Impulssignal auszusenden;
eine zweite durchgestimmte Lichtquelle (42), die dazu ausgebildet ist, nach dem Empfang des Triggersignals ein zweites optisches Impulssignal auszusenden;
einen ersten optischen Impulsverstärker (43), der dazu ausgebildet ist, das erste optische Impulssignal zu verstärken, so dass ein erstes verstärktes optisches Impulssignal erhalten wird;
einen zweiten optischen Impulsverstärker (44), der dazu ausgebildet ist, das zweite optische Impulssignal zu verstärken, so dass ein zweites verstärktes optisches Impulssignal erhalten wird;
einen ersten Zirkulator (45), der dazu ausgebildet ist, das erste verstärkte optische Impulssignal an die erste Gitteranordnung zu liefern; und
einen zweiten Zirkulator (46), der dazu ausgebildet ist, das zweite verstärkte optische Impulssignal an die zweite Gitteranordnung zu liefern.

3. System zur Positionierung der Magnetschwebebahn nach Anspruch 2, wobei das Datenverarbeitungsmodul Folgendes umfasst:
einen ersten photoelektrischen Wandler (51), der dazu ausgebildet ist, ein erstes zu erfassendes optisches Signal zu empfangen, das von der ersten Gitteranordnung vom ersten Zirkulator zurückgesendet wird, und das erste zu erfassende optische Signal in ein erstes zu erfassendes elektrisches Signal umzuwandeln;
einen zweiten photoelektrischen Wandler (52), der dazu ausgebildet ist, ein zweites zu erfassendes optisches Signal zu empfangen, das von der zweiten Gitteranordnung vom zweiten Zirkulator zurückgesendet wird, und das zweite zu erfassende optische Signal in ein zweites zu erfassendes elektrisches Signal umzuwandeln;
einen Datensammler (53), der dazu ausgebildet ist, das erste zu erfassende elektrische Signal und das zweite zu erfassende elektrische Signal zu kombinieren und zu kodieren, so dass ein elektrisches Codierungssignal erhalten wird; und
einen Datenprozessor (54), der dazu ausgelegt ist, das elektrische Codierungssignal zu decodieren, so dass das erste zu erfassende elektrische Signal und das zweite zu erfassende elektrische Signal erhalten werden, und eine dreistufige Positionierung des Zuges auf der Grundlage der durch das erste zu erfassende elektrische Signal und das zweite zu erfassende elektrische Signal angezeigten Mittenwellenlängenverschiebungen der Magnetinduktionsgitter durchzuführen.

4. System zur Positionierung der Magnetschwebebahn nach Anspruch 1, wobei der bordeigene Magnet mehrere Teilmagnete umfasst und die mehreren Teilmagnete in Fahrtrichtung des Zuges in einem Halbach-Array angeordnet ist.

5. System zur Positionierung der Magnetschwebebahn nach Anspruch 4, wobei ein Abstand zwischen benachbarten Magnetinduktionsgittern in jeder Gitteranordnung einem ersten voreingestellten Abstandsschwellenwert entspricht, ein Abstand zwischen benachbarten Teilmagneten im bordeigenen Magneten in Fahrtrichtung des Zuges einem zweiten voreingestellten Abstandsschwellenwert entspricht und eine Gesamtlänge des bordeigenen Magneten dem ersten voreingestellten Abstandsschwellenwert entspricht; und
das Datenverarbeitungsmodul ferner dazu ausgebildet ist, eine Strecke, die der Zug weiterhin zurücklegt, ausgehend von einer aktuellen Position des Zuges auf der Grundlage einer Mittenwellenlängenverschiebung eines Zielgitters zu ermitteln, nachdem das Zielgitter, dessen Mittenwellenlänge sich innerhalb der zweiten Gitteranordnung verschiebt, und die aktuelle Position auf der Grundlage einer dreistufigen Positionierung des Zuges ermittelt wurden.

6. System zur Positionierung der Magnetschwebebahn nach Anspruch 1, wobei die erste Gitteranordnung eine Gitteranordnung im O-Band ist, die zweite Gitteranordnung eine Gitteranordnung im C-Band ist.

7. System zur Positionierung der Magnetschwebebahn nach Anspruch 1, wobei das Datenverarbeitungsmodul ferner dazu ausgebildet ist:
einen vorwärtsgerichteten Zustand und einen rückwärtsgerichteten Zustand des Zuges innerhalb einer voreingestellten Gleisstrecke auf der Grundlage der Mittenwellenlängenverschiebung der zweiten Gitteranordnung zu ermitteln.

8. System zur Positionierung der Magnetschwebebahn nach Anspruch 1, wobei das Datenverarbeitungsmodul ferner dazu ausgebildet ist:
eine Echtzeit-Fahrgeschwindigkeit des Zuges auf der Grundlage einer Echtzeit-Positionsänderung und einer Fahrzeit des Zuges zu ermitteln.

9. Verfahren zur Positionierung einer Magnetschwebebahn, angewendet auf das System zur Positionierung einer Magnetschwebebahn nach einem der Ansprüche 1 bis 8, wobei das Verfahren Folgendes umfasst:
Durchführung der primären Positionierung des Zuges auf der Grundlage der Mittenwellenlängenverschiebung des Markierungsgitters (S1);
Durchführung der sekundären Positionierung des Zuges auf der Grundlage der Mittenwellenlängenverschiebung der ersten Gitteranordnung (S2); und
Durchführung der tertiären Positionierung des Zuges auf der Grundlage der Mittenwellenlängenverschiebung der zweiten Gitteranordnung, um die Gleisstelle, die der Zug durchfahren hat, schrittweise zu lokalisieren (S3).

## Revendications

1. Système de positionnement d'un train à sustentation magnétique, comprenant :
un aimant embarqué (1) agencé au niveau d'un plancher d'un train ;
deux matrices de réseaux disposées en parallèle sur une voie ferrée dans un sens de marche du train,
chacune des deux matrices de réseaux comprenant une pluralité d'ensembles de réseaux d'induction magnétique ;
des longueurs d'onde centrales des réseaux d'induction magnétique dans le même ensemble au sein d'une première matrice de réseau (2) parmi les deux matrices de réseaux étant identiques, et des longueurs d'onde centrales des réseaux d'induction magnétique dans différents ensembles au sein de la première matrice de réseau étant différentes ;
des longueurs d'onde centrales des réseaux d'induction magnétique dans le même ensemble au sein d'une deuxième matrice de réseau (3) parmi les deux matrices de réseaux étant différentes, et des longueurs d'onde centrales de réseaux d'induction magnétique à la même position d'agencement dans des ensembles différents au sein de la deuxième matrice de réseau étant identiques ;
un premier réseau d'induction magnétique de chaque ensemble de réseaux d'induction magnétique étant réalisé sous forme de réseau de repérage ; et
un seul réseau d'induction magnétique dans la même matrice de réseau étant affecté par l'aimant embarqué à un même instant ;
un module de génération d'impulsions optiques (4), réalisé de manière à fournir un signal d'impulsion optique aux deux matrices de réseaux ;
un module de traitement de données (5), réalisé de manière à effectuer un positionnement primaire du train sur la base d'un décalage de longueur d'onde centrale du réseau de repérage, à effectuer un positionnement secondaire du train sur la base d'un décalage de longueur d'onde centrale de la première matrice de réseau, et à effectuer un positionnement tertiaire du train sur la base d'un décalage de longueur d'onde centrale de la deuxième matrice de réseau, afin de localiser progressivement un emplacement de voie sur lequel le train s'est déplacé ; et
le module de traitement de données étant en outre réalisé de manière :
à obtenir un premier signal à détecter renvoyé par la première matrice de réseau ;
à obtenir un deuxième signal à détecter renvoyé par la deuxième matrice de réseau ;
à déterminer que le train circule vers un segment de voie où se trouve un nouvel ensemble de réseaux d'induction magnétique, dans le cas où un signal indiquant le décalage de longueur d'onde centrale du réseau de repérage est détecté dans le deuxième signal à détecter ;
à déterminer que le train circule vers un segment de voie où se trouve un premier ensemble de réseaux d'induction magnétique, dans le cas où un signal indiquant le décalage de longueur d'onde centrale de l'un quelconque des réseaux d'induction magnétique dans le premier ensemble de réseaux d'induction magnétique est détecté dans le premier signal à détecter, le premier ensemble de réseaux d'induction magnétique étant un ensemble quelconque de réseaux d'induction magnétique dans la première matrice de réseau ; et
à déterminer que le train circule vers un emplacement de voie où se trouve un réseau cible, dans le cas où un signal indiquant un décalage de longueur d'onde centrale du réseau cible dans un deuxième ensemble de réseaux d'induction magnétique parallèle à la première ensemble de réseaux d'induction magnétique, est détecté dans le deuxième signal à détecter, le réseau cible étant l'un quelconque des réseaux d'induction magnétique dans le deuxième ensemble de réseaux d'induction magnétique.

2. Système de positionnement du train à sustentation magnétique selon la revendication 1, le module de génération d'impulsions optiques comprenant :
une première source lumineuse à balayage (41), réalisée de manière à émettre un premier signal d'impulsion optique après la réception d'un signal de déclenchement ;
une deuxième source lumineuse à balayage (42), réalisée de manière à émettre un deuxième signal d'impulsion optique après la réception du signal de déclenchement ;
un premier amplificateur d'impulsions optiques (43), réalisé de manière à amplifier le premier signal d'impulsion optique afin d'obtenir un premier signal d'impulsion optique amplifié ;
un deuxième amplificateur d'impulsions optiques (44), réalisé de manière à amplifier le deuxième signal d'impulsion optique afin d'obtenir un deuxième signal d'impulsion optique amplifié ;
un premier circulateur (45), réalisé de manière à fournir le premier signal d'impulsion optique amplifié à la première matrice de réseau ; et
un deuxième circulateur (46), réalisé de manière à fournir le deuxième signal d'impulsion optique amplifié à la deuxième matrice de réseau.

3. Système de positionnement du train à sustentation magnétique selon la revendication 2, le module de traitement de données comprenant :
un premier convertisseur photoélectrique (51), réalisé de manière à recevoir un premier signal optique à détecter renvoyé par la première matrice de réseau depuis le premier circulateur, et à convertir le premier signal optique à détecter en un premier signal électrique à détecter ;
un deuxième convertisseur photoélectrique (52), réalisé de manière à recevoir un deuxième signal optique à détecter renvoyé par la deuxième matrice de réseau depuis le deuxième circulateur, et à convertir le deuxième signal optique à détecter en un deuxième signal électrique à détecter ;
un collecteur de données (53), réalisé de manière à combiner et coder le premier signal électrique à détecter et le deuxième signal électrique à détecter afin d'obtenir un signal électrique de codage ; et
un processeur de données (54), réalisé de manière à décoder le signal électrique de codage afin d'obtenir le premier signal électrique à détecter et le deuxième signal électrique à détecter, et à effectuer un positionnement à trois niveaux du train sur la base des décalages de longueur d'onde centrale des réseaux d'induction magnétique indiqués par le premier signal électrique à détecter et le deuxième signal électrique à détecter.

4. Système de positionnement du train à sustentation magnétique selon la revendication 1, l'aimant embarqué comprenant une pluralité de sous-aimants, et la pluralité de sous-aimants étant agencée selon un réseau de Halbach dans le sens de marche du train.

5. Système de positionnement du train à sustentation magnétique selon la revendication 4, un espacement entre des réseaux d'induction magnétique adjacents dans chaque matrice de réseau étant égal à un premier seuil d'espacement prédéfini, un espacement entre des sous-aimants adjacents dans l'aimant embarqué, dans le sens de marche du train, étant égal à un deuxième seuil d'espacement prédéfini, et une longueur totale de l'aimant embarqué étant égale au premier seuil d'espacement prédéfini ; et
le module de traitement de données étant en outre réalisé de manière à déterminer une distance que le train continue de parcourir à partir d'une position actuelle du train sur la base d'un décalage de longueur d'onde centrale d'un réseau cible, après avoir déterminé le réseau cible dont la longueur d'onde centrale se décale au sein de la deuxième matrice de réseau, et la position actuelle à partir d'un positionnement à trois niveaux du train.

6. Système de positionnement du train à sustentation magnétique selon la revendication 1, la première matrice de réseau étant une matrice de réseau dans la bande O, la deuxième matrice de réseau étant une matrice de réseau dans la bande C.

7. Système de positionnement du train à sustentation magnétique selon la revendication 1, le module de traitement de données étant en outre réalisé de manière :
à déterminer un état de marche avant et un état de marche arrière du train sur une distance de voie prédéfinie, sur la base du décalage de longueur d'onde centrale de la deuxième matrice de réseau .

8. Système de positionnement du train à sustentation magnétique selon la revendication 1, le module de traitement de données étant en outre réalisé de manière :
à déterminer une vitesse de circulation en temps réel du train sur la base d'un changement de position en temps réel et d'un temps de circulation du train.

9. Procédé de positionnement d'un train à sustentation magnétique, appliqué au système de positionnement d'un train à sustentation magnétique selon l'une des revendications 1 à 8, le procédé comprenant :
la réalisation du positionnement primaire du train sur la base du décalage de longueur d'onde centrale du réseau de repérage (S1) ;
la réalisation du positionnement secondaire du train sur la base du décalage de longueur d'onde centrale de la première matrice de réseau (S2) ; et
la réalisation du positionnement tertiaire du train sur la base du décalage de longueur d'onde centrale de la deuxième matrice de réseau afin de localiser progressivement l'emplacement de voie sur lequel le train s'est déplacé (S3).
